# EUROPÄISCHE PATENTSCHRIFT

(11) **EP 0 898 889 B1**
(45) Veröffentlichungstag und Bekanntmachung des Hinweises auf die Patenterteilung: **29.10.2003**
(21) Anmeldenummer: 98114288.8
(22) Anmeldetag: 30.07.1998
(51) Int. Cl.: A01N 1/02, G01N 33/68, A61K 38/39, A61K 47/42

(54) **Spülflüssigkeit für Blutzellen**
Washing solution for blood cells
Solutions de lavage pour cellules sanguines

(30) Priorität: 16.08.1997 DE 19735460
(43) Veröffentlichungstag der Anmeldung: 03.03.1999
(73) Patentinhaber: Zander, Rolf, Prof.Dr., D-55124 Mainz (DE)
(72) Erfinder: Zander, Rolf, Prof.Dr., D-55124 Mainz (DE)
(74) Vertreter: Weber, Dieter, Dr.

(56) Entgegenhaltungen:
- EP-A- 0 431 385
- US-A- 3 970 427
- K.H. GÄNSHIRT ET AL.: "A five-bag system for washing fresh and frozen erythrocytes and their preservation" VOX SANG, Bd. 26, 1974, Seiten 66-73, XP002083959
- S. BREHME ET AL.: "Hämorheologische Wirkungen von Hydroxyäthylstärke 200/0.5, Dextran 40, Oxypolygelatine und Vollelektrolytlösung über 48 stunden" INNERE MEDIZIN, Bd. 48, Nr. 10, 1993, Seiten 506-510, XP002083960
- H. KUMMER ET AL.: "Separation of platelet rich plasma and red cells with modified gelatin" VOX SANG, Bd. 24, 1973, Seiten 76-88, XP002083961
- G. ROCK ET AL.: "Modified fluid gelatin in leukapheresis accumulation and persistance in body" TRANSFUSION, Bd. 24, Nr. 1, 1984, Seiten 68-73, XP002083962

## Beschreibung

Die Erfindung betrifft das Gebiet der Spülflüssigkeiten für Blutzellen, insbesondere von Flüssigkeiten zum Waschen von Erythrocyten.

Spülflüssigkeiten für Blutzellen, insbesondere für Erythrocyten, werden bei verschiedenen Verfahren benötigt. Beispielsweise werden bei der maschinellen Autotransfusion, d.h. der Gewinnung und Aufbereitung intraoperativ gewonnener Erythrocyten diese für nachfolgende Retransfusion mit einer Spülflüssigkeit gewaschen. In sogenannten Zellseparatoren werden bei der maschinellen Aufbereitung von Blutkomponenten, wie Erythrocyten, Leukocyten oder Thrombocyten, die Zellen mit einer Spülflüssigkeit getrennt, um sie separat kurzfristig lagern zu können. Dabei sollen die Blutzellen, wie Erythrocyten, durch den Kontakt mit einer solchen Flüssigkeit keinen oder möglichst geringen Veränderungen unterliegen.

Das Spülen von Erythrocyten erfolgt heute gewöhnlich mit physiologischer Kochsalzlösung. Es ist auch bekannt, Erythrocytenkonzentraten zur Verlängerung der Lagerzeit sogenannte Additiv-Lösungen zuzusetzen, wie beispielsweise Mannitol, in der Form von sogenanntem SAG-Mannitol oder PAGGS-Mannitol (s. Sibrowski, Anästhesiol. Intensivmed. Notfallmed. Schmerzther. 1997, 32 (Suppl. 1), Seite 70). Bekannt sind auch gelatinehaltige Infusionslösungen, die aber mit einer Verwendung als Spülflüssigkeit für Blutzellen nichts zu tun haben.

Beim Waschen von Erythrocyten mit NaCl-Lösung für die Autotransfusion wurden Beeinträchtigungen der Erythrocytenqualität durch den Kontakt mit der Spülflüssigkeit festgestellt. Diese Qualitätseinbußen von Erythrocyten zeigen sich vor allem durch Beeinträchtigung des O₂-Transportvermögens der Erythrocyten, charakterisiert durch die Form und Lage der sogenannten O₂-Bindungskurve, durch spontante Hämolyse mit der Folge steigender Hämoglobin- und Kaliumkonzentration in der umgebenden Flüssigkeit, durch reduzierten 2,3-DPG- und ATP-Gehalt der Erythrocyten und Störung des Säure-Basen-Haushalts der gewonnenen Erythrocyten. Derartige Qualitätsverluste werden in der Literatur ausführlich beschrieben (s. R. Karger, V. Kretschmer, Anaesthesist 1996, 45, Selten 694 - 707; M. von Finck et al., Anaesthesist 1986, 35, Seiten 686 - 692). Nach derzeitigem Verständnis stehen bei den Qualitätsverlusten von Erythrocyten deren mechanische Eigenschaften mit ihren Folgen für die Hämolyse und damit für den Verlust an transfundierbaren Erythrocyten und den Anstieg des extrazellulären freien Hämoglobins und Kaliums im Vordergrund. Demzufolge wird gefordert, daß Erythrocytenpräparate nur dann transfundiert werden dürfen, wenn die Hämolyse des Präparates nicht größer als 0,8% ist (Council of Europe, Recommendations 1997).

Aufgrund der ermittelten Qualitätseinbußen von Erythrocyten durch die Berührung mit bekannten Spülflüssigkeiten ergab sich die der Erfindung zugrundeliegende Aufgabe, Spülflüssigkeiten für Blutzellen, insbesondere Erythrocyten, zu bekommen, die keine oder allenfalls geringe qualitätsverschlechternde Veränderungen, insbesondere eine möglichst geringe mechanische Hämolyse-Rate der Blutzellen ergeben.

Überraschenderweise wurde gefunden, daß diese Aufgabe gelöst wird, wenn man erfindungsgemäß als Spülflüssigkeit für Blutzellen, insbesondere Erythrocyten, eine wäßrige Lösung von 10 bis 100g/ℓ Gelatine verwendet.

Gelatine ist bekanntermaßen ein Polypeptid, das insbesondere durch Hydrolyse des in Haut und Knochen von Tieren enthaltenen Kollagens gewonnen wird. Bei der Gewinnung bekommt man einen breiten Molekulargewichtsbereich. Das Polypeptid kann durch Reaktion vor allem der Aminogruppen mit mono- oder polyfunktionellen Reagentien modifiziert werden, wie beispielsweise mit Acylierungsmitteln, Aldehyden, Epoxiden, Halogenverbindungen, Cyanamed oder aktivierten ungesättigten Verbindungen. So sind beispielsweise succinylierte Gelatine, Oxypolygelatine und über Harnstoffbrücken vernetzte Gelatine in Infusionslösungen bekannt. Für die erfindungsgemäße Verwendung als Spülflüssigkeiten können grundsätzlich alle modifizierten oder unmodifizierten Gelatinetypen benutzt werden.

Zweckmäßigerweise wird das Molekulargewicht der verwendeten Gelatine so gewählt und die Konzentration der Gelatine in der wäßrigen Lösung so eingestellt und auf das Molekulargewicht abgestimmt, daß die erhaltene wäßrige Lösung im wesentlichen iso-onkotisch ist, d.h. im wesentlichen dem kolloidosmotischen Druck des Plasmas entspricht. Außerdem ist die Abstimmung von Molekulargewicht und Konzentration der Gelatine zweckmäßig so, daß die Viskosität der Lösung derjenigen von Blutplasma möglichst weitgehend entspricht und die Dichte der erhaltenen Lösung niedrig ist. Die Gelatine wird dabei günstigerweise so ausgewählt, daß ihr Molekulargewicht im Bereich von 20.000 bis 40.000, besonders im Bereich von 30.000 bis 35.000 liegt. Derartige Gelatinetypen unmodifizierter oder modifizierter Art sind im Handel erhältlich. Die Konzentration der Gelatine in der erfindungsgemäßen wäßrigen Lösung liegt bevorzugt im Bereich von 25 bis 60 g/l, besonders bevorzugt im Bereich von 30 bis 55 g/l.

Je nach Verwendungszweck können die erfindungsgemäß verwendeten wäßrigen Lösungen von Gelatine übliche weitere Bestandteile enthalten und können sterilisiert und steril verpackt sein. Zusätzliche Additive sind beispielsweise die Blutgerinnung verhindernde Mittel, wie Citrat, Heparin und Heparinderivate, Glucose, insbesondere in einer Menge von 2,5 bis 7,5 mmol/l und Elektrolyten. Unter diesen kommen insbesondere Natrium, vorzugsweise in einer Konzentration von 130 bis 150 mmol/l, Kalium, vorzugsweise in einer Konzentration von 3 bis 5 mmol/l, Calcium, vorzugsweise in einer Konzentration von 1 bis 3 mmol/l, und Magnesium, vorzugsweise in einer Konzentration von 0,5 bis 1,5 mmol/l in der wäßrigen Gelatinelösung in Betracht.

### Beispiele und Vergleichsbeispiele

Zur Bestimmung der Hämolyse von Erythrocyten wurden wäßrige Lösungen vier verschiedener handelsüblicher Gelatinetypen nach der Erfindung sowie handelsübliche Additive und Dextrane und Hydroxyethylstärke, die für Infusionslösungen angeboten werden, und schließlich physiologische Kochsalzlösung eingesetzt. Die Lösungen wurden bezüglich der Spontanhämolyse und der mechanischen Hämolyse verglichen, wobei jeweils die Gelatinelösungen, Hydroxyethylstärke-Lösungen, Dextran-Lösungen und Additiv-Lösungen zusammengefaßt wurden, da ihre Hämolysewerte ungeachtet der Provenienz jeweils nahe beieinander lagen.

Die Spontanhämolyse wurde wie folgt ermittelt: Frisches Humanblut wurde jeweils unter Ersatz des Plasmas durch überschüssige Spülflüssigkeit (10 ml Flüssigkeit je 2 ml Erythrocyten) dreimal zentrifugiert (10 min bei 1600g). Der Hämatokrit wurde auf 50 ± 5% durch Entfernung überschüssiger Spülflüssigkeit eingestellt. Sodann wurde die Konzentration des freien Hämoglobins In der letzten Spülflüssigkeit ermittelt.

Die mechanische Hämolyse-Rate wurde mit Hilfe eines Tonometers IL 237 (Fa. Instrumentation Laboratory) ermittelt. In diesem Gerät wurde in einem auf 37°C temperierten, mit Wasserdampf gesättigten Gasen durchströmten Raum in einem Glasgefäß (Volumen maximal 8 ml) durch intermittierende Rotation, also Beschleunigung und Abstoppen des Gefäßes, ein dünner, jeweils frischer Film der Erythrocyten erzeugt. Es wurde bei physiologischen Bedingungen (pH 7,40 und CO₂-Partialdruck 40 mm Hg) eine Stunde intermittierend rotiert. Sodann wurde die Hämoglobinkonzentration im Überstand bestimmt. Die erhaltenen Werte finden sich in der nachfolgenden Tabelle.

**Tabelle**

| Spontan-Hämolyse (%) nach Aufschwemmen von Erythrocyten und mechanische Hämolyse-Rate (%/h) von Erythrocyten (Hämatokrit 50 ± 5%) | | |
|---|---|---|
| | Spontan-Hämolyse (%) | Mechanische Hämolyse-Rate (%/h) |
| 7 Plasma-Proben | nicht meßbar | 0,06 ± 0,07 |
| 7 Proben in 0,9 g/dl NaCl (Vergleich) | 0,3 ± 0,2 | 2,2 ± 0,7 |

| Infusionslösungen | | |
|---|---|---|
| 4 Präparate Gelatine (Erfindung) | 0,04 ± 0,04 | 0,1 ± 0,08 |
| Konzentration 30 - 55 g/l | | |
| MW 30.000 - 35.000 | | |
| 8 Präparate Hydroxyethylstärke (Vergleich) | 0,3 ± 0,2 | 3,0 ± 0,7 |
| Konzentration 30 - 100 g/l | | |
| MW 70.000 - 450.000 | | |
| 7 Präparate Dextran (Vergleich) | 0,4 ± 0,2 | 5,7 ± 2,7 |
| Konzentration 60 - 100 g/l | | |
| MW 40.000 - 70.000 | | |

| Additiv-Lösungen | | |
|---|---|---|
| 2 Präparate | | |
| PAGGS- bzw. SAG-Mannitol (Vergleich) | 0,1 | 2,8 |

Die erhaltenen Werte zeigen, daß sowohl die Spontanhämolyse als auch die mechanische Hämolyse-Rate der vier untersuchten Gelatinelösungen mit den Werten von Plasma vergleichbar sind und die Gelatinelösungen eine vernachlässigbare Hämolyse ergeben. Die Werte liegen weit unter dem vom Council of Europe geforderten Hämolysewert von 0,8%. Im Gegensatz dazu lagen die Hämolysewerte sowohl für die Spontanhämolyse als auch für die mechanische Hämolyse bei der heute für das Spülen von Erythrocyten üblicherweise verwendeten physiologischen Kochsalzlösung und bei den heute für die Erythrocytenkonzentratlagerung üblichen Additiv-Lösungen erheblich höher und weit über dem geforderten Wert von 0,8%.

Zu Vergleichszwecken wurden auch bekannte Infusionslösungen mit Hydroxyethylstärke und Dextran in die Versuche einbezogen. Die Hämolyse mit diesen Polymeren lag noch höher als bei den untersuchten Additiv-Lösungen und physiologischer Kochsalzlösung.

## Patentansprüche

1. Verwendung einer wäßrigen Lösung von 10 bis 100 g/ℓ Gelatine als Spülflüssigkeit für Blutzellen, insbesondere Erythrocyten.

2. Verwendung einer Lösung von Gelatine, deren Molekulargewichtsbereich und Konzentration so aufeinander abgestimmt sind, daß die Lösung im wesentlichen iso-onkotisch ist, nach Anspruch 1.

3. Verwendung einer Lösung von Gelatine mit einem Molekulargewicht im Bereich von 20.000 bis 40.000, vorzugsweise im Bereich von 30.000 bis 35.000 nach Anspruch 1 oder 2.

4. Verwendung einer wäßrigen Lösung von Gelatine mit einer Konzentration von 25 bis 60 g/l, insbesondere 30 bis 55 g/l nach einem der Ansprüche 1 bis 3.

5. Verwendung einer wäßrigen Lösung von Gelatine mit einem Gehalt an Glukose, vorzugsweise im Bereich von 2,5 bis 7,5 mmol/l, nach einem der Ansprüche 1 bis 4.

6. Verwendung einer wäßrigen Lösung von Gelatine mit einem Elektrolytgehalt, vorzugsweise mit 130 bis 150 mmol/l Natrium, 3 bis 5 mmol/l Kalium, 1 bis 3 mmol/l Calcium und/oder 0,5 bis 1,5 mmol/l Magnesium, nach einem der Ansprüche 1 bis 5.

7. Verwendung einer wäßrigen Lösung von Gelatine mit einem Gehalt eines die Blutgerinnung verhindernden Mittels, vorzugsweise Citrat, Heparin oder eines Heparinderivates, nach einem der Ansprüche 1 bis 6.

## Claims

1. Use of an aqueous solution of between 10 to 100 g/l of gelatin as a flushing liquid for blood cells, in particular erythrocytes.

2. Use of a solution of gelatin whose molecular weight range and concentration are so matched to each other that the solution is substantially iso-oncotic, according to claim 1.

3. Use of a solution of gelatin with a molecular weight in the range of between 20,000 and 40,000, preferably in the range of between 30,000 and 35,000, according to claim 1 or claim 2.

4. Use of an aqueous solution of gelatin with a concentration of between 25 and 60 g/l, in particular between 30 and 55 g/l, according to one of claims 1 to 3.

5. Use of an aqueous solution of gelatin with a content of glucose, preferably in the range of between 2.5 and 7.5 mmol/l, according to one of claims 1 to 4.

6. Use of an aqueous solution of gelatin with an electrolyte content, preferably with between 130 and 150 mmol/l sodium, between 3 and 5 mmol/l potassium, between 1 and 3 mmol/l calcium and/or between 0.5 and 1.5 mmol/l magnesium, according to one of claims 1 to 5.

7. Use of an aqueous solution of gelatin with a content of an agent for preventing blood coagulation, preferably citrate, heparin or a heparin derivative, according to one of claims 1 to 6.

## Revendications

1. Utilisation d'une solution aqueuse de 10 à 100 g/l de gélatine en tant que liquide de lavage de cellules sanguines, en particulier d'érythrocytes.

2. Utilisation d'une solution de gélatine dont la gamme des masses moléculaires et la concentration sont déterminées l'une en fonction de l'autre de façon telle que la solution est essentiellement iso-oncotique, selon la revendication 1.

3. Utilisation d'une solution de gélatine présentant une masse moléculaire comprise dans la gamme allant de 20 000 à 40 000, de préférence dans la gamme allant de 30 000 à 35 000, selon la revendication 1 ou 2.

4. Utilisation d'une solution aqueuse de gélatine présentant une concentration comprise entre 25 et 60 g/l, en particulier comprise entre 30 et 55 g/l, selon l'une des revendications 1 à 3.

5. Utilisation d'une solution aqueuse de gélatine comprenant une teneur en glucose de préférence comprise dans la gamme allant de 2,5 à 7,5 mmol/l, selon l'une des revendications 1 à 4.

6. Utilisation d'une solution aqueuse de gélatine comprenant une teneur en électrolytes de préférence comprise entre 130 et 150 mmol/l de sodium, entre 3 et 5 mmol/l de potassium, entre 1 et 3 mmol/l de calcium et/ou entre 0,5 et 1,5 mmol/l de magnésium, selon l'une des revendications 1 à 5.

7. Utilisation d'une solution aqueuse de gélatine comprenant une teneur en agent anticoagulant, de préférence le citrate, l'héparine ou un dérivé d'héparine, selon l'une des revendications 1 à 6.
